# FASCICULE DE BREVET EUROPEEN

(11) **EP 0 789 132 B1**
(45) Date de publication et mention de la délivrance du brevet: **08.10.2003**
(21) Numéro de dépôt: 97400267.7
(22) Date de dépôt: 06.02.1997
(51) Int. Cl.: E21B 37/06, C10L 3/00

(54) **Procédé pour inhiber ou retarder la formation la croissance et/ou l'agglomération des hydrates**
Verfahren zum Inhibieren oder Verzögeren der Formation, des Wuchs und/oder der Agglomerierung von Hydraten
Process for inhibition or retarding the formation, the growth and/or the agglomeration of hydrates

(30) Priorité: 07.02.1996 FR 9601584; 04.04.1996 FR 9604392
(43) Date de publication de la demande: 13.08.1997
(73) Titulaire: Institut Français du Pétrole, 92852 Rueil-Malmaison Cedex (FR)
(72) Inventeur: Sinquin, Anne, 92500 Rueil Malmaison (FR); Velly, Marie, 75020 Paris (FR); Durand, Jean-Pierre, 78400 Chatou (FR)

(56) Documents cités:
- WO-A-95/32356

## Description

L'invention concerne un procédé pour inhiber ou retarder la formation, la croissance ou/et l'agglomération des hydrates de gaz naturel, de gaz de pétrole ou d'autres gaz, par utilisation d'au moins un additif. Les gaz qui forment des hydrates peuvent notamment comprendre au moins un hydrocarbure choisi parmi le méthane, l'éthane, l'éthylène, le propane, le propène, le n-butane et l'iso-butane, et éventuellement de l'H₂S et/ou du CO₂.

Ces hydrates se forment lorsque l'eau se trouve en présence de gaz, soit à l'état libre, soit à l'état dissous dans une phase liquide, telle qu'un hydrocarbure liquide, et lorsque la température atteinte par le mélange notamment d'eau, de gaz et éventuellement d'hydrocarbures liquides, tels que de l'huile, devient inférieure à la température thermodynamique de formation des hydrates, cette température étant donnée pour une composition des gaz connue et lorsque leur pression est fixée.

La formation d'hydrates peut être redoutée, notamment dans l'industrie pétrolière et gazière, pour lesquelles les conditions de formation d'hydrates peuvent être réunies. En effet, pour diminuer le coût de production du pétrole brut et du gaz, tant au point de vue des investissements qu'au point de vue de l'exploitation, une voie envisagée, notamment en production en mer, est de réduire, voire de supprimer, les traitements appliqués au brut ou au gaz à transporter du gisement à la côte et notamment de laisser toute ou une partie de l'eau dans le fluide à transporter. Ces traitements en mer s'effectuent en général sur une plate-forme située en surface à proximité du gisement, de manière que l'effluent, initialement chaud, puisse être traité avant que les conditions thermodynamiques de formation des hydrates ne soient atteintes du fait du refroidissement de l'effluent avec l'eau de mer.

Cependant, comme cela arrive pratiquement, lorsque les conditions thermo-dynamiques requises pour former des hydrates sont réunies, l'agglomération des hydrates entraîne le blocage des conduites de transport par création de bouchons qui empêchent tout passage de pétrole brut ou de gaz.

La formation de bouchons d'hydrates peut entraîner un arrêt de la production et provoquer ainsi des pertes financières importantes. De plus, la remise en service de l'installation, surtout s'il s'agit de production ou de transport en mer, peut être longue, car la décomposition des hydrates formés est très difficile à réaliser. En effet, lorsque la production d'un gisement sous-marin de gaz naturel ou de pétrole et de gaz comportant de l'eau atteint la surface du sol marin et est ensuite transportée au fond de la mer, il arrive, par l'abaissement de la température de l'effluent produit, que les conditions thermodynamiques soient réunies pour que des hydrates se forment, s'agglomèrent et bloquent les conduites de transfert. La température au fond de la mer peut être, par exemple, de 3 ou 4°C.

Des conditions favorables à la formation d'hydrates peuvent aussi être réunies de la même façon à terre, pour des conduites pas (ou pas assez profondément) enfouies dans le sol terrestre, lorsque par exemple la température de l'air ambiant est froide.

Pour éviter ces inconvénients, on a cherché, dans l'art antérieur, à utiliser des produits qui, ajoutés au fluide, pourraient agir comme inhibiteurs en abaissant la température thermodynamique de formation des hydrates. Ce sont notamment des alcools, tels que le méthanol, ou des glycols, tels que le mono-le di- ou le tri-éthylèneglycol. Cette solution est très onéreuse car la quantité d'inhibiteurs à ajouter peut atteindre 10 à 40 % de la teneur en eau et ces inhibiteurs sont difficiles à récupérer complètement.

On a également préconisé l'isolation des conduites de transport, de manière à éviter que la température du fluide transporté n'atteigne la température de formation des hydrates dans les conditions opératoires. Une telle technique est, elle aussi, très coûteuse.

On a encore décrit l'utilisation d'additifs capables de modifier le mécanisme de formation des hydrates, puisque, au lieu de s'agglomérer rapidement les uns aux autres et de former des bouchons, les hydrates formés se dispersent dans le fluide sans s'agglomérer et sans obstruer les conduites. On peut citer à cet égard : la demande de brevet EP-A-323774 au nom de la demanderesse, qui décrit l'utilisation de composés amphiphiles non-ioniques choisis parmi les esters de polyols et d'acides carboxyliques, substitués ou non-substitués, et les composés à fonction imide ; la demande de brevet EP-A-323775, également au nom de la demanderesse, qui décrit notamment l'utilisation de composés appartenant à la famille des diéthanolamides d'acides gras ou de dérivés d'acides gras ; le brevet US-A-4956593 qui décrit l'utilisation de composés tensioactifs tels que des phosphonates organiques, des esters phosphates, des acides phosphoniques, leurs sels et leurs esters, des polyphosphates inorganiques et leurs esters, ainsi que des polyacrylamides et des polyacrylates ; et la demande de brevet EP-A-457375, qui décrit l'utilisation de composés tensioactifs anioniques, tels que les acides alkylarylsulfoniques et leurs sels de métaux alcalins.

Des composés amphiphiles obtenus par réaction d'au moins un dérivé succinique choisi dans le groupe formé par les acides et les anhydrides polyalkénylsucciniques sur au moins un monoéther de polyéthylèneglycol ont également été proposés pour réduire la tendance à l'agglomération des hydrates de gaz naturel, de gaz de pétrole ou d'autres gaz (demande de brevet EP-A-582507).

Par ailleurs, on a également préconisé l'utilisation d'additifs capables d'inhiber ou de retarder la formation et/ou la croissance des hydrates. On peut citer à cet égard la demande de brevet EP-A-536950, qui décrit l'utilisation de dérivés de la tyrosine, la demande internationale WO-A-9325798, qui décrit l'utilisation de composés homopolymères et copolymères de la N-vinyl-2-pyrrolidone et leurs mélanges, la demande internationale WO-A-9412761 et le brevet US-A-5432292 qui décrivent l'utilisation de la poly(N-vinyl-2-pyrrolidone), de l'hydroxyéthyl-cellulose et de leurs mélanges ou d'un terpolymère à base de N-vinyl-2-pyrrolidone, d'ε-vinyl-caprolactame et de diméthyl-aminoéthyl-méthacrylate commercialisé sous le nom de GAFFIX VC-713. La demande internationale WO-A-9519408 décrit plus généralement l'utilisation de polymères aliphatiques contenant des N-hétérocycles carbonylés dans des formulations complexes. Il en est de même de la demande internationale WO-A-9532356, qui décrit notamment l'utilisation de terpolymères à base de N-vinyl-2-pyrrolidone, d'acrylamido-méthyl-propane-sulfonate et d'acrylamide. Enfin, la demande internationale WO-A-9517579 décrit l'utilisation de dérivés ammonium, sulfonium et phosphonium alkylés.

On a maintenant découvert que, contrairement à l'enseignement de la demande internationale WO-A-9532356, certains copolymères hydrosolubles ne contenant pas d'hétérocycles et chargés négativement, permettent, à de faibles concentrations, d'inhiber ou de retarder la formation, la croissance et/ou l'agglomération des hydrates de gaz naturel, de gaz de pétrole ou d'autres gaz, avec une efficacité très nettement supérieure aux composés précédemment décrits.

Ainsi, l'invention propose un procédé pour inhiber ou retarder la formation, la croissance et/ou l'agglomération des hydrates au sein d'un fluide comprenant de l'eau et un gaz, dans des conditions où des hydrates peuvent se former (à partir d'eau et de gaz), caractérisé en ce qu'on incorpore audit fluide au moins un copolymère hydrosoluble de formule générale :

**[A]**ₙ **[B]**ₘ **[C]**ₚ [1]

dans laquelle les motifs de type [A] contiennent au moins un groupement sulfonate, les motifs de type [B] sont issus de monomères hydrophiles et les motifs de type [C] de monomères hydrophobes. Les motifs [A], [B] et [C] sont définis comme suit :
∗ les motifs [A] répondent à la formule générale 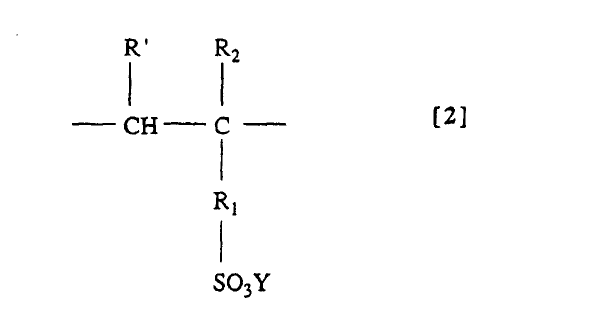 dans laquelle R₁ est choisi parmi la liaison simple, les groupements divalents CH₂ et les groupements divalents C₆H₄, CONHC(CH₃)₂-CH₂ et CO-NHR", avec R" un groupement de type alkylène de C₂ à C₁₀, R₂ est un atome d'hydrogène ou un radical méthyle, R' est un atome d'hydrogène ou un radical méthyle et Y est un atome d'hydrogène , un atome de métal alcalin ou un groupement ammonium;
∗ les motifs [B] répondent à la formule générale 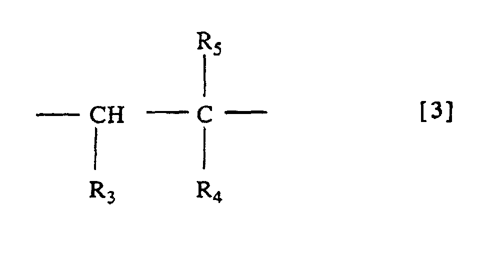 dans laquelle R₃ est un atome d'hydrogène ou un groupement COOY où Y est un atome d'hydrogène, un atome de métal alcalin ou un groupement ammonium, R₄ est choisi parmi les groupements COOY où Y est un atome d'hydrogène, un atome de métal alcalin ou un groupement ammonium, les groupements CONH₂ et NR'-COR', où R' représente un atome d'hydrogène ou un groupement méthyle, et R₅ est un atome d'hydrogène ou un groupement méthyle ; et
∗ les motifs [C] répondent à la formule générale : 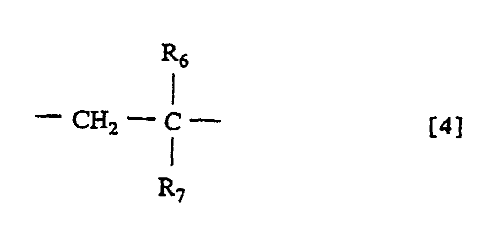 dans laquelle R₆ est un atome d'hydrogène ou un groupe méthyle et R₇ est choisi parmi les groupements C₆H₅, COOR'₁, CONHR'₁ ou CONR'₁R'₂ et NR'₁COR'₂ où R'₁ et R'₂ représentent un radical alkyle de C₃-C₁₄, aryle ou alkyl-aryle de C₆-C₃₀.

Le copolymère utilisé comme additif dans le procédé de l'invention peut comporter au moins un motif de type [A], au moins un motif de type [B] et éventuellement au moins un motif de type [C]. Les proportions des différents monomères définis dans l'invention sont d'au moins 5 % en mole pour le ou les motifs [A], d'au plus 95 % en mole pour le ou les motifs [B] et de 0 à 20 % en mole pour le ou les motifs de type [C]. Ainsi, dans la formule [1], pour une somme **n+m+p** égale à 1, la valeur de **n** est d'au moins 0,05, celle de **m** d'au plus 0,95 et celle de **p** de 0 à 0,2.

Les copolymères décrits ci-dessus peuvent avoir une masse moléculaire moyenne en poids de 2 000 à 10 000 000.

Parmi les copolymères préférés dans la mise en oeuvre du procédé de l'invention, on peut citer ceux dans lesquels les motifs [A] dérivent d'au moins un composé choisi parmi l'acrylamido-méthyl-propane-sulfonate, le méthacrylamido-méthyl-propane-sulfonate, le vinyl-sulfonate et le styrène-sulfonate ; les motifs [B] dérivent d'au moins un composé choisi parmi l'acide acrylique, l'acide méthacrylique, l'acrylamide et le méthacrylamide et les motifs [C] dérivent d'au moins un composé choisi parmi les méthacrylates d'alkyle de C₃ à C₁₄, comme le méthacrylate de nonyle.

Dans le procédé de l'invention, les copolymères tels que décrits ci-dessus peuvent être ajoutés dans le fluide à traiter seuls ou sous forme de mélanges de deux ou plusieurs copolymères, par exemple de deux copolymères. Les deux copolymères ainsi utilisés en mélange peuvent différer par exemple par la nature des motifs d'au moins un type et/ou par une composition différente en au moins un motif et/ou par leur masse moléculaire. Les mélanges en toutes proportions d'au moins deux copolymères peuvent être ajoutés dans le fluide à traiter à des concentrations allant en général de 0,05 à 5 % en masse, de préférence de 0,1 à 2 % en masse, par rapport à l'eau.

Par ailleurs, les copolymères préconisés comme additifs dans l'invention peuvent être mélangés à un ou plusieurs alcools (monoalcools ou polyols) renfermant par exemple de 1 à 6 atomes de carbone, plus particulièrement le mono-, le di- ou le tri-éthylèneglycol, l'éthanol ou le méthanol, ce dernier étant l'alcool préféré. Cet alcool (ou ces alcools) est (sont) ajouté(s) en général en des proportions allant de 0,5 à 20% en masse, de préférence de 1 à 10% en masse par rapport à l'eau présente dans le fluide à traiter. Le (ou les) copolymère(s) considérés dans l'invention peuvent être alors préalablement dissous en milieu hydro-alcoolique et ensuite ajoutés au milieu à traiter, de façon à obtenir des concentrations finales en copolymères allant en général de 0,05 à 3% en masse, de préférence de 0,1 à 1% en masse par rapport à l'eau présente dans le fluide à traiter. La présence dans le milieu d'additif(s) cinétique(s) tels que les polymères préconisés dans l'invention et d'alcool(s) tels que par exemple le méthanol, permet par leurs actions conjuguées d'obtenir des retards à la formation des hydrates extrêmement satisfaisants et ce, d'une part, en diminuant les quantités d'additifs utilisés (alcools et polymères) et d'autre part, - et surtout - en permettant d'opérer dans une gamme de températures beaucoup plus basses.

Les copolymères hydrosolubles considérés dans l'invention peuvent être utilisés soit en milieu eau pure, par exemple dans de l'eau de condensation, soit en milieu salin, par exemple dans de l'eau de production.

L'invention sera mieux comprise à la lecture des expérimentations suivantes, nullement limitatives, menées en présence d'hydrates de THF. Les exemples 4 à 12 sont donnés à titre comparatif et ne font pas partie de l'invention.

### Exemple 1

La procédure expérimentale de sélection des additifs est menée sur des hydrates de tétrahydrofuranne (THF). Une solution eau pure/THF (80/20 en masse) forme des hydrates sous pression atmosphérique à 4°C (*Kinetic Inhibitors of Natural Gas Hydrates*, Sloan, E.D. et al.; 1994).

Le dispositif utilisé est constitué de tubes de diamètre 16 mm, dans lesquels sont introduits 8 ml d'une solution aqueuse à 20 % en masse de THF contenant éventuellement l'additif à tester. On introduit dans chaque tube une bille en verre d'un diamètre de 8 mm, afin d'assurer un brassage correct de la solution. Les tubes sont placés sur un agitateur rotatif, qui tourne à 20 tours/min.. Ce dernier est placé dans une enceinte réfrigérée à 2°C.

Le principe de ce test est de déterminer le temps de latence précédant la formation des hydrates. Ce temps de latence correspond à l'intervalle mesuré entre le moment où les tubes sont introduits dans l'enceinte réfrigérée et le moment où on observe la formation des hydrates (apparition d'un trouble).

Chaque série de tests est menée en présence d'un mélange de référence ne contenant pas d'additif, et les temps de latence fournis pour un additif correspondent à une moyenne des temps mesurés sur 16 essais.

Dans les conditions opératoires décrites ci-dessus, les solutions eau pure/THF ont un temps de latence moyen de 35 minutes.

Dans les conditions opératoires mises en oeuvre, l'addition de 0,5 % en masse d'un copolymère acrylamide / acrylamido-méthyl-propane-sulfonate- (AA/AMPS) contenant 10% en mole de motifs AMPS et de masse 2.10⁶, multiplie le temps de latence par approximativement 5, l'addition de 0,5% en masse d'un copolymère AA/AMPS de masse 500 000 contenant 25% de monomères de type AMPS conduit quant à lui à un temps d'induction qui est en moyenne plus de 7 fois supérieur à celui de l'eau pure. L'addition de 0,5% en masse d'un copolymère contenant 68% de motifs acrylamide, 12% de motifs AMPS et 20% de motifs acide acrylique permet de multiplier par 7,5 le temps de latence. L'addition de 0,5% en masse d'un copolymère contenant 50% en mole de motifs de styrène-sulfonate (SS) et 50% en mole de motifs acrylamide (AA) permet de multiplier par plus de 8 le temps de latence. Enfin, l'addition d'un mélange de type AA/SS (50/50) + AA/AMPS (75/25) dans un rapport 40/60 en masse, à une concentration de 0,3% en masse par rapport à l'eau inhibe la formation des hydrates de THF pendant une période supérieure à 6 heures.

### Exemple 2

La procédure expérimentale de l'exemple 1 est répétée en remplaçant l'eau pure par un mélange eau pure + 5% de méthanol en masse et en abaissant la température de l'enceinte réfrigérée à -1°C.

Dans ces conditions, le temps de latence moyen des solutions eau pure + 5% de méthanol/THF en l'absence d'additif est de 29 minutes.

L'addition de 0,15% en masse d'un copolymère AA/AMPS (60/40) dans le milieu eau + 5% de méthanol multiplie le temps de latence par plus de 8.

### Exemple 3

La procédure expérimentale de l'exemple 1 est répétée en remplaçant l'eau pure par une solution de NaCl 3,5% en masse, la température de l'enceinte réfrigérée est abaissée à 0°C. Dans ces conditions, le temps de latence moyen des solutions NaCl/THF en l'absence d'additif est de 42 minutes.

L'addition de 0,3% en masse d'un terpolymère contenant 25% en mole de motif AMPS, 73,5% en mole de motif acrylamide et 1,5% en mole de motifs hydrophobes méthacrylate de nonyle (MANON) permet de multiplier par environ 6 le temps de latence. L'addition de 0,3% en masse d'un copolymère AA/MANON/AMPS/Acide acrylique (85,25/0,75/13/1) permet de multiplier par plus de 7 le temps de latence.

L'addition de 0,5% en masse d'un copolymère AA/AMPS de masse 8.10⁶ contenant 12% en mole de motifs de type AMPS, ou d'un terpolymère AA/AMPS/N-vinyl-acétamide (31/55/14) de masse 2.10⁶, ou encore l'addition de 0,3% en masse d'un copolymère AA/AMPS de masse 10⁶ contenant 40% en mole de motifs de type AMPS inhibent la formation des hydrates de THF pendant une période supérieure à 6 heures.

### Exemples 4 à 12 (comparatifs)

Différents additifs sortant du cadre de l'invention ont été testés à titre de comparaison dans les conditions précédemment décrites (exemples 1, 2 et 3) :

Ex. 4 : Poly-vinyl-pyrrolidone (poids moléculaire 10 000 ; 0,5 % en masse).

Ex. 5 : Polyacrylamide (0,5 % en masse).

Ex. 6 : Copolymère acrylamide/acrylate de sodium (0,5% en masse).

Ex.7 : Tensioactif commercial de type alkyl-aryl-sulfonate: DOBANAX 312 (0,5% en masse).

Ex. 8 : Tensioactif commercial de type alkyl-sulfonate: BIOTERGE PAS 8 S (1,5% en masse de solution commerciale, soit 0,5% en mase de matière active).

Ex. 9 : GAFFIX VC-713 (N-vinyl-2-pyrrolidone / ε-vinyl-caprolactame / diméthyl-amino-éthyl-méthacrylate ; 0,3 % en masse).

Ex. 10 : HE-300 (terpolymère N-vinyl-2-pyrrolidone / acrylamido-méthyl-propane-sulfonate / acrylamide : 0,3% en masse).

Ex. 11 : Tensioactif commercial de type alkyl-aryl-sulfonate: DOBANAX-312 (0,3% en masse)

Ex. 12 : Tensioactif commercial de type alkyl-sulfonate: BIOTERGE PAS 8 S (0,9% en masse de solution commerciale, soit 0,3% en masse de matière active.

Dans les conditions de tests mises en oeuvre, ces additifs présentent des temps d'induction précédant la formation des hydrates nettement plus courts que les substances mentionnées dans l'invention, comme le montrent les résultats rassemblés dans le tableau ci-dessous.

| Additif (% molaire des motifs) | Concentration (% en masse) | Conditions opératoires | Temps de latence (min) |
|---|---|---|---|
| Ex. 1: | | | |
| - sans additif | / | eau pure/THF à 2°C | 35 |
| - AA/AMPS (90/10) | 0,5 | eau pure/THF à 2°C | 163 |
| - AA/AMPS (75/25) | 0,5 | eau pure/THF à 2°C | 261 |
| - AA/AMPS/Ac.acrylique (68/12/20) | 0,5 | eau pure/THF à 2°C | 263 |
| - AA/SS (50/50) | 0,5 | eau pure/THF à 2°C | 283 |
| - AA/SS(50/50)+AA/AMPS(75/25) **[40/60]** | 0,3 | eau pure/THF à 2°C | >360 |
| | | | |
| Ex. 2: | | | |
| - sans additif | / | eau +5% MeOH/THF à -1°C | 29 |
| - AA/AMPS (60/40) | 0,15 | eau +5% MeOH/THF à -1°C | 240 |
| | | | |
| Ex. 3: | | | |
| - sans additif | / | NaCl 3,5%/THF à 0°C | 42 |
| - AA/AMPS/MANON (73,5/25/1,5) | 0,3 | NaCl 3,5%/THF à 0°C | 248 |
| - AA/MANON/AMPS/Ac.acrylique (85,25/0,75/13/1) | 0,3 | NaCl 3,5%/THF à 0°C | 305 |
| - AA/AMPS (88/12) | 0,5 | NaCl 3,5%/THF à 0°C | >360 |
| - AA/AMPS/VA (31/55/14) | 0,5 | NaCl 3,5%/THF à 0°C | >360 |
| - AA/AMPS (60/40) | 0,3 | NaCl 3,5%/THF à 0°C | >360 |
| Ex. 4 : | 0,5 | eau pure/THF à 2°C | 45 |
| | | | |
| Ex. 5 : | 0,5 | eau pure/THF à 2°C | 100 |
| Ex. 6 : | 0,5 | eau pure/THF à 2°C | 71 |
| Ex. 7 : | 0,5 | eau pure/THF à 2°C | 54 |
| Ex. 8 : | 1,5 (0,5 en m.a.) | eau pure/THF à 2°C | 79 |
| | | | |
| Ex. 9 : | 0,3 | NaCl 3,5%/THF à 0°C | 204 |
| | | | |
| Ex. 10 : | 0,3 | NaCl 3,5%/THF à 0°C | 220 |
| Ex. 11 : | 0,3 | NaCl 3,5%/THF à 0°C | insoluble |
| Ex. 12 : | 0,9 (0,3 en m.a.) | NaCl 3,5%/THF à 0°C | insoluble |

### Exemple 13 :

Pour tester l'efficacité des produits utilisés dans le procédé de l'invention, en présence d'hydrates de méthane, on a procédé à des essais de formation d'hydrates à partir de gaz et d'eau, à l'aide de l'appareillage décrit ci-après.

L'appareillage comporte une boucle de 6 mètres constituée de tubes de diamètre intérieur égal à 7,7 mm, un réacteur de 2 litres comprenant une entrée et une sortie pour le gaz, une aspiration et un refoulement pour le mélange eau et additif initialement introduit. Le réacteur permet de mettre la boucle sous pression. Des tubes de diamètre analogue à ceux de la boucle assurent la circulation du fluide de la boucle au réacteur, et inversement, par l'intermédiaire d'une pompe à engrenages placée entre les deux. Une cellule saphir intégrée dans le circuit permet une visualisation du liquide en circulation et donc des hydrates si ils se sont formés.

Pour déterminer l'efficacité des additifs selon l'invention, on introduit le fluide (eau et additif) dans le réacteur. L'installation est ensuite portée sous une pression de 7 MPa. La solution est homogénéisée par sa circulation dans la boucle et le réacteur, puis la boucle est isolée du réacteur. La pression est maintenue constante par apport de méthane, et on impose une diminution progressive de la température (0,5°C/min) de 17°C à 5°C, qui correspond à la température expérimentale choisie.

Le principe de ces essais est de déterminer, d'une part la température de formation des hydrates de méthane dans la boucle, et d'autre part le temps de latence précédant leur formation. Le temps de latence, correspond au temps mesuré entre le début du test (circulation du fluide à 17°C) et la détection de la formation des hydrates (exothermie, forte consommation en gaz). La durée des tests peut varier de quelques minutes à plusieurs heures : un additif performant inhibe la formation des hydrates, ou les maintient dispersés dans les fluides pendant plusieurs heures.

En l'absence d'additif (milieu : eau désionisée), les hydrates de méthane se forment à une température voisine de 10,0°C et après un temps d'induction de 30 minutes. La formation des hydrates conduit à un blocage immédiat de la circulation du mélange fluide + hydrates dans la boucle.

L'addition de 0,3% en masse de copolymère AA/AMPS (60/40) de masse 10⁶ inhibe totalement la formation des hydrates de méthane dans les conditions de pression et de température imposées pour ce test même après 24 heures de circulation.

## Revendications

1. Procédé pour inhiber ou retarder la formation, la croissance et/ou l'agglomération des hydrates au sein d'un fluide comprenant de l'eau et un gaz, dans des conditions où des hydrates peuvent se former à partir d'eau et de gaz, **caractérisé en ce qu'**on incorpore audit fluide au moins un copolymère hydrosoluble de formule générale
[**A**]ₙ [**B**]ₘ [**C**]ₚ [1]
qui comprend :
- des motifs [A] qui répondent à la formule générale : 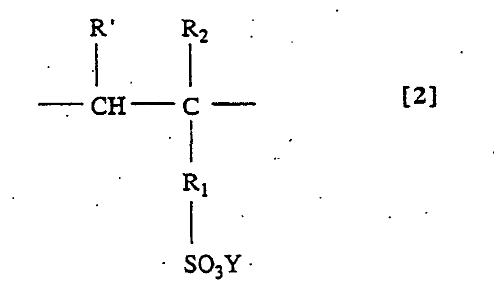
dans laquelle R₁ est choisi parmi la liaison simple, les groupements divalents CH₂ et les groupements divalents C₆H₄, CO-NH-C(CH₃)₂-CH₂ et CO-NHR", avec R" un groupement de type alkylène de C₂ à C₁₀, R₂ est un atome d'hydrogène ou un radical méthyle, R⁺ est un atome d'hydrogène ou un radical méthyle et Y est un atome d'hydrogène , un atome de métal alcalin ou un groupement ammonium;
- des motifs [B], issus de monomères hydrophiles, qui répondent à la formule générale : 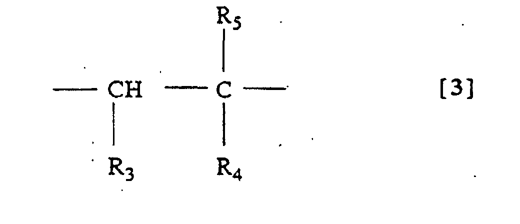
dans laquelle R₃ est un atome d'hydrogène ou un groupement COOY, où Y est un atome d'hydrogène, un atome de métal alcalin ou un groupement ammonium ; R₄ est choisi parmi les groupements COOY, où Y est un atome d'hydrogène, un atome de métal alcalin ou un groupement ammonium, les groupements CONH₂ et NR'-COR', où R' représenté un atome d'hydrogène ou un groupement méthyle, et R₅ est un atome d'hydrogène ou un groupement méthyle ;
- et éventuellement des motifs [C], issus de monomères hydrophobes, qui répondent à la formule générale : 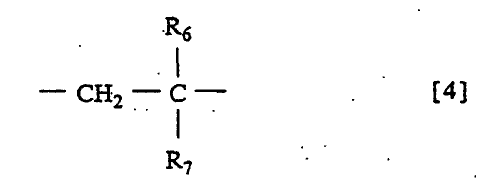
dans laquelle R₆ est un atome d'hydrogène ou un groupe méthyle et R₇ est choisi parmi les groupements C₆H₅, COOR'₁, CONHR'₁ ou CONR'₁R'₂ et NR'₁COR'₂, où R'₁ et R'₂ représentent un radical alkyle de C₃-C₁₄, aryle ou alkyl-aryle de C₆-C₃₀.
les nombres **n, m** et **p** représentant les proportions respectives des motifs de type [A], [B] et [C] dans ledit copolymère.

2. Procédé selon la revendication 1, **caractérisé en ce que** dans la formule [1] **n** a une valeur d'au moins 0,05, **m** a une valeur d'au plus 0,95 et p une valeur de 0 à 0,2 pour une somme **n** + **m** + **p** de 1.

3. Procédé selon l'une des revendications 1 et 2, **caractérisé en ce que** ledit copolymère hydrosoluble a une masse moléculaire moyenne en poids de 2 000 à 10 000 000.

4. Procédé selon l'une des revendications 1 à 3, **caractérisé en ce que** dans ledit copolymère, les motifs [A] dérivent d'au moins un composé choisi parmi l'acrylamido - méthyl - propane-sulfonate, le méthacrylamido - méthyl - propane - sulfonate, le vinyl-sulfonate et le styrène-sulfonate; les motifs [B] dérivent d'au moins un composé choisi parmi l'acide acrylique, l'acide méthacrylique, l'acrylamide et le méthacrylamide; et les motifs [C] dérivent d'au moins un composé choisi parmi les méthacrylates d'alkyle de C₃ à C₁₄, comme le méthacrylate de nonyle.

5. Procédé selon l'une des revendications 1 à 4, **caractérisé en ce que** ledit copolymère hydrosoluble est ajouté au fluide à une concentration de 0,05 à 5% en masse par rapport à la teneur en eau.

6. Procédé selon la revendication 5, **caractérisé en ce que** ladite concentration est de 0,1 à 2% en masse par rapport à la teneur en eau.

7. Procédé selon l'une des revendications 1 à 4, **caractérisé en ce que** ledit copolymère hydrosoluble est utilisé en mélange avec au moins un alcool choisi parmi les monoalcools et les polyols de 1 à 6 atomes de carbone.

8. Procédé selon la revendication 7, **caractérisé en ce que** ledit alcool est mis en jeu en une proportion de 0,5 à 20% en masse par rapport à l'eau.

9. Procédé selon l'une des revendications 7 et 8, **caractérisé en ce que** ledit copolymère hydrosoluble est préalablement dissous en milieu hydro-alcoolique en proportion appropriée et la solution est ajoutée au fluide en une proportion correspondant à une concentration en copolymère de 0,05 à 3% en masse par rapport à l'eau.

10. Procédé selon l'une des revendications 1 à 6, **caractérisé en ce que** le copolymère hydrosoluble est utilisé en milieu eau pure.

11. Procédé selon l'une des revendications 1 à 6, **caractérisé en ce que** le copolymère hydrosoluble est utilisé en milieu salin.

## Patentansprüche

1. Verfahren zum Inhibieren oder Verzögern der Bildung, des Wachstums und/oder der Agglomerierung der Hydrate in einem Fluid, das Wasser und ein Gas umfasst, unter Bedingungen, wo sich Hydrate aus Wasser und Gas bilden können, **dadurch gekennzeichnet, dass** man dem Fluid wenigstens ein wasserlösliches Copolymer einverleibt mit einer allgemeinen Formel:
[A]n [B]m [C]p [1]
welche umfasst:
- Motive [A], die der allgemeinen Formel 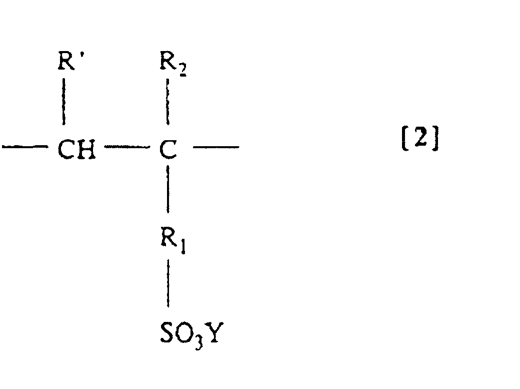 entsprechen, in der R₁ gewählt ist unter der Einfachbindung, den divalenten CH₂-Gruppen und den divalenten Gruppen C₆H₄, CO-NH-C(CH₃)₂-CH₂ und CO-NHR" mit R" einer Gruppe vom Typ C₂- bis C₁₀-Alkylen, R₂ ein Wasserstoffatom oder ein Methylrest ist und Y ein Wasserstoffatom, ein Alkalimetallatom oder eine Ammoniumgruppe ist;
- Motive [B] aus hydrophilen Monomeren, die der allgemeinen Formel 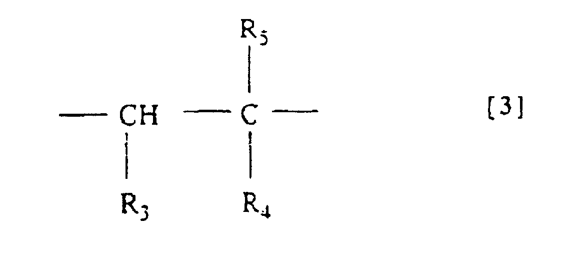 entsprechen, in der R₂ ein Wasserstoffatom oder eine COOY-Gruppe ist,
wobei Y ein Wasserstoffatom, ein Alkalimetallatom oder eine Ammoniumgruppe ist; R₄ gewählt ist unter den COOY-Gruppen, wobei Y ein Wasserstoffatom, ein Alkalimetallatom oder eine Ammoniumgruppe ist, den Gruppen CONH₂ und NR'-COR', wobei R' ein Wasserstoffatom oder eine Methylgruppe darstellt und R₅ ein Wasserstoffatom oder eine Methylgruppe ist;
- und gegebenenfalls Motive [C] aus hydrophoben Monomeren, die der allgemeinen Formel 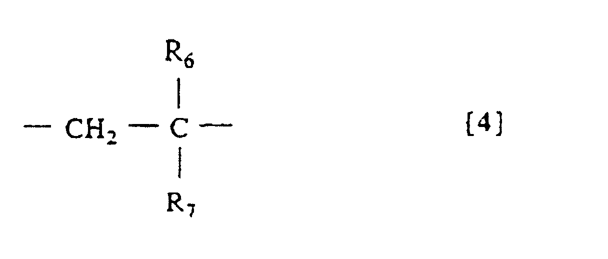 entsprechen, in der R₆ ein Wasserstoffatom oder eine Methylgruppe ist und R₇ gewählt ist unter den Gruppen C₆H₅, COOR'₁, CONHR'₁ oder CONR'₁R'₂ und NR'₁COR'₂, wobei R'₁ und R'₂ ein C₃-C₁₄-Alkylrest, oder ein Arylrest oder -Alkylarylrest von C₆-C₃₀ darstellen,
wobei die Zahlen n, m und p die jeweiligen Anteile der Motive vom Typ [A], [B] und[C] in dem Copolymer darstellen.

2. Verfahren nach Anspruch 1, **dadurch gekennzeichnet, dass** in der Formel [1] n einen Wert von wenigstens 0,05 hat, m einen Wert von höchstens 0,95 hat und p einen Wert von 0 bis 0,2, für eine Summe n+m+p von 1.

3. Verfahren nach einem der Ansprüche 1 und 2, **dadurch gekennzeichnet, dass** das wasserlösliche Copolymer eine mittlere Molekularmasse in Gewicht von 2 000 bis 10 000 000 hat.

4. Verfahren nach einem der Ansprüche 1 bis 3, **dadurch gekennzeichnet , dass** in dem Copolymer sich die Motive [A] von wenigstens einer Verbindung ableiten, die gewählt ist unter Acrylamidomethylpropansulfonat, Methacrylamidomethylpropansulfonat, Vinylsulfonat und Styrolsulfonat; sich die Motive [B] von wenigstens einer Verbindung ableiten, die gewählt ist unter Acrylsäure, Methacrylsäure, Acrylamid und Methacrylamid; und sich die Motive [C] von wenigstens einer Verbindung ableiten, die gewählt ist unter den Methacrylaten von C₃- bis C₁₄-Alkyl wie Nonylmethacrylat.

5. Verfahren nach einem der Ansprüche 1 bis 4, **dadurch gekennzeichnet, dass** das wasserlösliche Copolymer dem Fluid bei einer Konzentration von 0,05 bis 5 Masse-% im Verhältnis zum Wassergehalt zugegeben wird.

6. Verfahren nach Anspruch 5, **dadurch gekennzeichnet, dass** die Konzentration von 0,1 bis 2 Masse-% im Verhältnis zum Wassergehalt ist.

7. Verfahren nach einem der Ansprüche 1 bis 4, dadurch gekennzeichn e t, dass das wasserlösliche Copolymer im Gemisch mit wenigstens einem Alkohol verwendet wird, der gewählt ist unter den Monoalkoholen und den Polyolen mit 1 bis 6 Kohlenstoffatomen.

8. Verfahren nach Anspruch 7, **dadurch gekennzeichnet, dass** der Alkohol in einem Anteil vom 0,5 bis 20 Masse-%. im Verhältnis zum Wasser eingesetzt wird.

9. Verfahren nach einem der Ansprüche 7 und 8, **dadurch gekennzeichnet, dass** das wasserlösliche Copolymer vorher im geeigneten Verhältnis im hydro-alkoholischem Milieu gelöst wird und die Lösung dem Fluid in einem Anteil zugegeben wird, der einer Copolymerkonzentration von 0,05 bis 3 Masse-% im Verhältnis zum Wassergehalt entspricht.

10. Verfahren nach einem der Ansprüche 1 bis 6, dadurch gekennzeichn e t, dass das wasserlösliche Copolymer im reinen Wassermilieu verwendet wird.

11. Verfahren nach einem der Ansprüche 1 bis 6, **dadurch gekennzeichnet, dass** das wasserlösliche Copolymer im salzhaltigen Milieu verwendet wird.

## Claims

1. A process for inhibiting or retarding hydrate formation, growth and/or agglomeration in a fluid comprising water and a gas, under conditions in which hydrates can form from the water and gas, **characterized in that** at least one hydrosoluble copolymer is incorporated into the fluid, the hydrosoluble copolymer having general formula:
[A]ₙ[B]ₘ[C]ₚ [1]
which comprises:
- [A] moieties having the general formula: 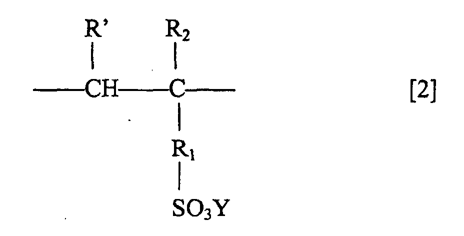 where R₁ is selected from a single bond, divalent CH₂ groups and divalent C₆H₄ groups, CONHC(CH₃)₂-CH₂ and CO-NHR", where R" is a C₂ to C₁₀ alkylene group, R₂ is a hydrogen atom or a methyl radical, R' is a hydrogen atom or a methyl radical and Y is a hydrogen atom, an alkali metal atom or an ammonium group;
- [B] moieties derived from hydrophilic monomers and having general formula: 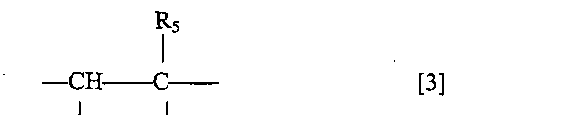 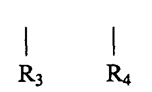 where R₃ is a hydrogen atom or a COOY group where Y is a hydrogen atom, an alkali metal atom or an ammonium group; R₄ is selected from groups COOY where Y is a hydrogen atom, an alkali metal atom or an ammonium group, groups CONH₂ and NR'-COR' where R' represents a hydrogen atom or a methyl group, and R₅ is a hydrogen atom or a methyl group;
- and optionally [C] moieties derived from hydrophobic monomers and having the general formula: 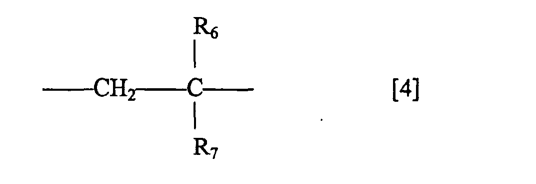
where R₆ is a hydrogen atom or a methyl group and R₇ is selected from groups C₆H₅, COOR'₁, CONHR'₁ or CONR'₁R' and NR'₁COR'₂ where R'₁ and R'₂ represent a C₃-C₁₄ alkyl radical or a C₆-C₃₀ aryl or alkylaryl radical,
numbers n, m and p representing the respective proportions of [A], [B] and [C] moieties in said copolymer.

2. A process according to claim 1, **characterized in that** in formula [1], n has a value of at least 0.05, m has a value of at most 0.95 and p has a value of 0 to 0.2 for a sum n+m+p of 1.

3. A process according to any one of claims 1 and 2, **characterized in that** said hydrosoluble copolymer has a mass average molecular mass of 2000 to 10,000,000.

4. A process according to any one of claims 1 to 3, **characterized in that** in said copolymer, the [A] moieties derive from at least one compound selected from acrylamidomethylpropane sulphonate, methacrylamido-methylpropane sulphonate, vinyl sulphonate and styrene sulphonate; the [B] moieties derive from at least one compound selected from acrylic acid, methacrylic acid, acrylamide and methacrylamide; and the [C] moieties derive from at least one compound selected from C₃ to C₁₄ alkyl methacrylates such as nonyl methacrylate.

5. A process according to any one of claims 1 to 4, **characterized in that** said hydrosoluble copolymer is added to the fluid in a concentration of 0.05% to 5% by weight with respect to the water content.

6. A process according to claims 5, **characterized in that** said concentration is 0.1% to 2% by weight with respect to the water content.

7. A process according to any one of claims 1 to 4, **characterized in that** said hydrosoluble copolymer is used in a mixture with at least one alcohol selected from monoalcohols and polyols containing 1 to 6 carbon atoms.

8. A process according to claim 7, **characterized in that** said alcohol is used in a proportion of 0.5% to 20% by weight with respect to the water.

9. A process according to claim 7 or claim 8, **characterized in that** said hydrosoluble copolymer is first dissolved in a hydro-alcoholic medium in an appropriate proportion and the solution is added to the fluid in a proportion corresponding to a concentration of copolymer of 0.05% to 3% by weight with respect to the water.

10. A process according to any one of claims 1 to 6, **characterized in that** said hydrosoluble copolymer is used in pure water.

11. A process according to any one of claims 1 to 6, **characterized in that** said hydrosoluble copolymer is used in a saline medium.
